# EUROPEAN PATENT SPECIFICATION

(11) **EP 1 426 139 B1**
(45) Date of publication and mention of the grant of the patent: **16.08.2006**
(21) Application number: 03078725.3
(22) Date of filing: 08.10.1998
(51) Int. Cl.: B24B 39/00, B23P 9/02

(54) **Burnishing apparatus for providing a layer of compressive residual stress in the surface of a workpiece**
Vorrichtung zum Prägepolieren zum Herstellen einer Restdruckspannung über einer Werkstückfläche
Appareil de brunissage permettant d'obtenir une couche de tension de compression residuelle dans la surface d'une piece

(43) Date of publication of application: 09.06.2004
(62) Divisional of application: 98952150.5
(73) Proprietor: Surface Technology Holdings, Ltd., Cincinnati, Ohio 45246 (US)
(72) Inventor: Prevey, Paul S. III, Cincinnati, OH 45246 (US)
(74) Representative: James, Anthony Christopher W.P.

(56) References cited:
- US-A- 2 247 887
- US-A- 4 947 668

## Description

The subject invention relates to a burnishing apparatus for providing a layer of compressive residual stress in the surface of a workpiece to provide a part with a relatively good finish and improved physical properties. An apparatus according to the preamble of claim 1 is known, for example, from US-A-4 947 668.

Surface residual stresses are known to have a major affect upon the fatigue and stress corrosion performance of components in service. Tensile residual stresses, which can be developed during manufacturing processes such as grinding, turning, or welding are well known to reduce both fatigue life and increase sensitivity to corrosion-fatigue and stress corrosion cracking in a wide variety of materials. It is well known that compressive residual stresses induced in the surface of a workpiece can increase fatigue life and reduce susceptibility to corrosion-fatigue and stress corrosion cracking. However, the benefit of a layer of surface compression in reducing susceptibility to stress corrosion, cracking, fatigue, and corrosion-fatigue is lost if the layer of compression relaxes with time in service.

There are many methods currently used for inducing compressive stress in the surface of a metal part and the particular method selected depends on several factors including the dimensions and shape of the workpiece, its strength and stiffness, the desired quality of the finished surface, the desired physical properties of the finished part, and the expense of performing the operation.

Burnishing has been used to improve surface finish, fatigue life, and corrosion resistance. The accepted practice for burnishing utilizes repeated deformation of the surface of the component, in order to deliberately cold work the surface of the material, to increase the yield strength. Compressive stresses are developed by yielding the surface of the material in tension so that it returns in a state of compression following deformation. Unfortunately however, excess cold working may produce tensile surface residual stresses and may leave the surface susceptible to overload and thermal relaxation.

One method commonly used in the industry to induce compressive stress in the surface of a workpiece is shot peening, whereby a plurality of metallic or ceramic pellets are projected mechanically or through air pressure to impinge the surface of a workpiece. While such a method is relatively inexpensive and is preferred for many applications, in order to obtain total coverage of the workpiece, areas of impingement often overlap. Such overlapping of areas of impingement often results in a large amount of cold working which leaves the surface compressive layer susceptible to stress relaxation. Further, shot peening is unacceptable for use for parts requiring a superior finish, localized compressive stress zones, or requiring a greater depth of compressive stress penetration.

Another method, similar to shot peening, commonly used in the industry to induce compressive stress in the surface of a workpiece is gravity peening, whereby pellets are dropped through a chute from a predetermined distance onto the surface of the workpiece. While gravity peening uses a smaller number of larger pellets to deform the surface, the workpiece continues to be subjected to a substantial amount of cold working. Further, like shot peening methods, gravity peening is often unacceptable for use with parts requiring a superior finish, localized compressive stress zones, or requiring a greater depth of compressive stress penetration.

Another method commonly used in industry for inducing compressive stress on the surface of a workpiece is by burnishing, whereby the contact portion of a burnishing assembly is pressed against the surface of the workpiece to deliberately cold work the surface to minimize surface roughness and increase surface hardness, thereby improving the fatigue strength of the part. Until now, it has been believed that the surface of a workpiece must be extensively cold worked by making multiple passes over the surface with the contact portion of the burnishing assembly with sufficient pressure to crush the elevations in the surface topography to achieve the desired surface hardness and therefore the desired residual compressive stress.

The burnishing apparatus utilized for cold working the surface of a workpiece typically comprise a plurality of cylindrical rollers or balls which contact the surface of the workpiece with sufficient pressure to cold work the surface to induce a compressive stress therein. Such burnishing apparatus, however, are typically limited to cylindrical or flat work pieces. Further, the use of multiple passes often results in excessive cold working which may cause surface tensile residual stresses, and leaving the compressive layer subject to relaxation.

It is also known that by lubricating the surface of the workpiece, the amount of surface damage resulting from the burnishing process can be significantly reduced. Unfortunately however, until now the application of lubricant has been performed by hand or with the use of a separate applicator which often hinders or prevents adequate lubrication at the point of contact of the workpiece and the contact portion of the burnishing apparatus.

Consequently, a need exists for a relatively inexpensive apparatus for implementing the method for improving the physical properties of a part by inducing a layer of compressive stress in the surface of the part, which is effective for use with complex curved surfaces and which provides for longer retention of compressive stresses than have previously been available using conventional methods of burnishing or shot peening.

### Disclosure of Invention

The invention is defined in the claim.

Advantages of the invention will be apparent from the following description, the accompanying drawings and the appended claims.

### Brief Description of the Drawings

The details of the invention will be described in connection with the accompanying drawings, in which:
**FIG. 1** is a longitudinal cross-sectional view of a preferred embodiment of the burnishing apparatus of the present invention;
**FIG. 2** is a longitudinal cross-sectional view of the socket of **FIG. 1** showing the generally cylindrical tip member integrally formed with a generally cylindrical rod member;
**FIG. 3** is an end view of the ball burnishing head of **FIG. 1** showing the burnishing ball and the retaining edge of the retaining cap having a plurality of channels protruding there through;
**FIG. 4** is a longitudinal cross-sectional view of another burnishing apparatus showing the use of a follower rod for adjusting the compressive force of the burnishing ball against the surface of a workpiece;
**FIG. 5** is a graph illustrating the residual compressive stress layer induced in the surface of a workpiece produced by conventional and the single-point burnishing method;
**FIG. 6** is a graph illustrating the percent of cold working associated with the residual compressive stress layers produced as shown in **FIG. 5**;
**FIG. 7** is a graph illustrating the residual compressive stress layer induced in the surface of a workpiece produced by conventional shot peening and the single-point burnishing method and residual compressive stress retention after one hour at an elevated temperature;
**FIG. 8** is a graph illustrating the percent of cold working associated with the residual compressive stress layers of **FIG. 7**;
**FIG. 9** is a graph illustrating the residual compressive stress layer induced in the surface of a workpiece and residual compressive stress retention after one hour at an elevated temperature produced by conventional gravity peening and the single-point burnishing method;
**FIG. 10** is a graph illustrating the percent of cold working associated with the residual compressive stress layers of **FIG. 9;**
**FIG. 11** is a partial side view of more than one burnishing apparatus of **FIG. 1** showing a method of simultaneously burnishing more than one side of a workpiece;
**FIG. 12** is a partial side view of more than one burnishing apparatus of **FIG. 1** showing a method of burnishing the interior surface of a workpiece; and
**FIG. 13** is a partial side view of another embodiment of the burnishing apparatus of **FIG. 1** showing a method of burnishing the surface of a workpiece having a acute surface angle such as a dovetail slot of a turbine or compressor disk.

### Best Mode for Carrying Out the Invention

A burnishing method making use of the present invention utilizes the process of single-point burnishing to provide deep compression with a minimal amount of cold working and surface hardening. In particular, the area to be burnished along the surface of the workpiece is defined and a burnishing apparatus having a single-point of contact burnishing means is forced against the surface of the workpiece to produce a zone of deformation producing a deep layer of compression within the surface. The burnishing means is then passed in a predetermined pattern across the area to be burnished such that the zones of deformation formed by each pass of the burnishing means do not overlap. It has been unexpectedly found that the single-point burnishing method, applied in a single-pass, or multiple passes of reduced compressive force, is effective for producing compressive residual stresses following tensile deformation of the surface to produce deep compression with minimal cold working.

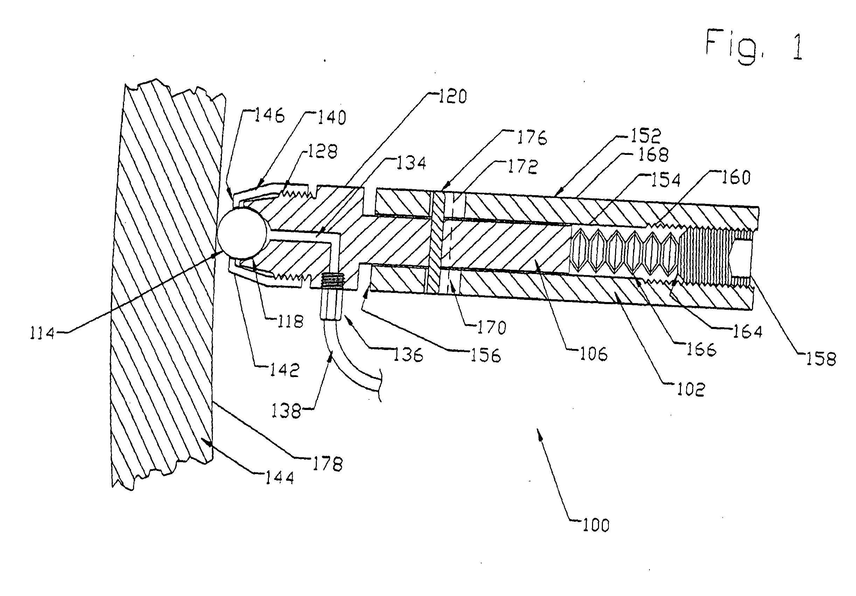

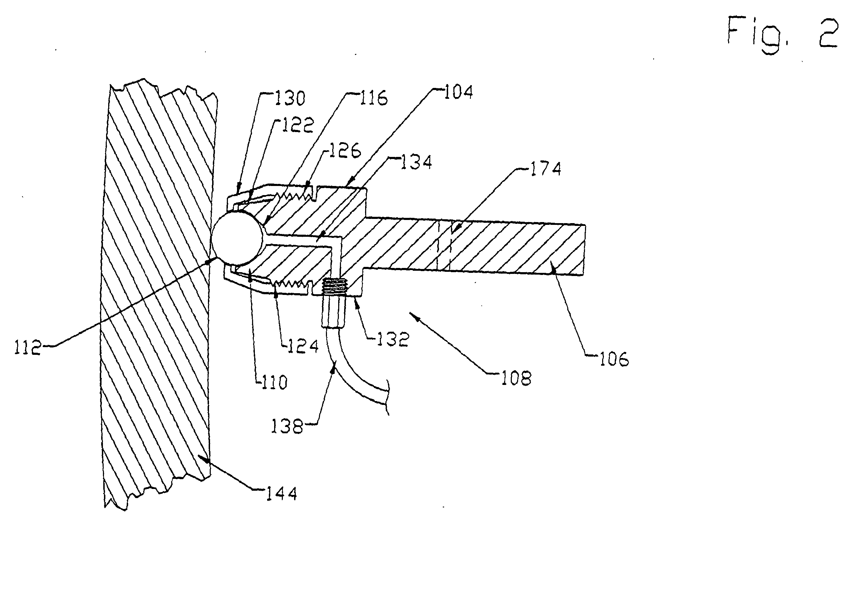

Referring to **FIGS. 1** and **2,** a preferred embodiment of the burnishing apparatus **100** for implementing the burnishing method is shown comprising a generally cylindrical tip member **104** integrally formed with a generally cylindrical rod member **106** to define a socket **108**, and a socket support **102** for supporting the socket on a conventional tool holder ("not shown).

The tip member **104** includes a ball seat **110** having an essentially spherical shape adapted to the surface **112** of a burnishing ball **114** which is disposed within the ball seat **110**. The size of the ball seat **110** is determined by the diameter of the burnishing ball **114** and is selected to provide a small clearance **116** between the support surface **118** of the ball seat **110** and the burnishing ball **114**. The burnishing ball **114** may be selected from various materials having a higher yield strength than the workpiece and having a relatively high elastic modules to allow maximal deformation of the workpiece. Typical materials include, but are not limited to, hardened steel, tungsten carbide and other similar materials. The outer peripheral surface **120** of the tip member **104** includes a tapered outer portion **122** and a cylindrical intermediate portion **124** having a threaded outer surface **126** for mating with the inner threaded surface **128** of a retaining cap **130**, and an inner portion **132** of somewhat greater diameter than the intermediate portion **124**. The tip member **104** of the socket **108** is further provided with a fluid passage **134** in flow communication with the ball seat **110** and extending from the ball seat **110** through the tip member **104** to a fitting **136** for connecting to an external fluid supply **138.**

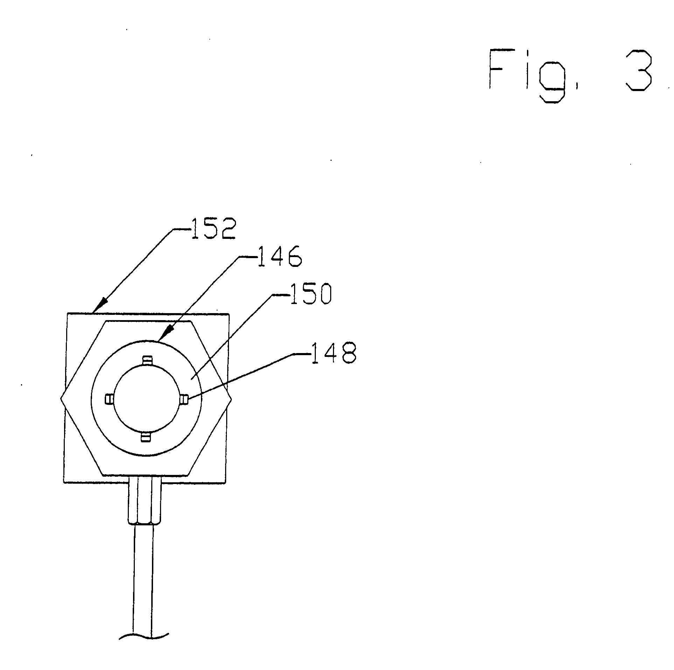

The retaining cap **130** is adapted to the size and configuration of the tip member **104** to be positioned longitudinally along and encircling the outer peripheral surface **120** of the tip member **104**. The forward portion **140** of the outer peripheral surface **142** of the retainer cap **130** is tapered to provide minimum interference with the arbitrary geometry of a workpiece **144**, and includes a radially inwardly extending retaining edge **146** for loosely retaining the burnishing ball **114** in the ball seat **110**. Referring to **FIG. 3**, several channels **148** are spaced along the surface **150** of the retaining edge **146** and penetrate axially there through, the purpose of which will be presently described.

The socket support **102** of the burnishing apparatus **100** includes a slide **152** comprising a longitudinally extending bore **154** having a first end **156** for receiving the rod member **106** of the burnishing socket **108** and a second end **158** having a threaded inner surface **160**. Received on the threads is a pressure adjustment screw **162** having an inner end **164** which is coupled to the rod member **106** of the burnishing socket **108** through a mechanical spring means **166** such as a Belvil or compression spring or other like means. In order to lock the rod member **106** within the first end **156** of the slide **152,** the outer peripheral surface **168** of the socket support **102** is provided with first and second recesses **170** each having a radially extending aperture **172** which cooperate with a radially extending aperture **174 (FIG. 2)** in the rod member **106** for receiving a lock pin **176.** The recesses and lock pin **176** configuration allows the socket **108** to expand or contract axially towards or away from the workpiece **144** while permitting the socket **108** to be easily attached or detached from the socket support **102**. However, other locking means such as detents, locking screws, and the like may also be utilized for retaining the rod member **106** within the bore **154** of the slide **152**.

Referring to **FIG. 3**, the slide **152** has a generally rectangular cross-section to permit it to be easily mounted to a fixture of any particular description for controlling the movement of the burnishing apparatus **100**, for example within the recess of a conventional lathe tool post. However, other cross-sectional configurations, such as a circular cross-section, may also be selected. Further, it will be apparent to one skilled in the art that the socket support may be provided with a flange or other known means for mounting onto a conventional tool support fixture.

To understand how the parts above described are interrelated, the operation of the burnishing apparatus **100** will now be described. During operation, lubricating fluid is fed under pressure from the external lubricating fluid supply **138** by use of a conventional fluid pumping system (not shown), through the fitting **136** and fluid passage **134**, and into the clearance **116** to force the burnishing ball **114** outwardly such that the forward most tip of the burnishing ball **114** extends slightly beyond the retaining edge **146** of the retaining cap **130**. Capillary action then draws the lubricating fluid around the outer surface **112** of the burnishing ball **114** until fluid pressure is equalized to permit the burnishing ball **114** to float continuously upon a thin film of lubricating fluid thereby providing a freely rotating fluid bearing. The socket **108** is then advanced towards the surface **178** of the workpiece **144** until the forward most tip of the burnishing ball **114** makes contact with the workpiece surface **178.** By further adjusting the fluid pressure, a desired amount of lubrication fluid will penetrate around the burnishing ball **114** and flow out through the fluid channels **148** in the retaining edge **146** to be transferred onto the surface **178** of the workpiece **144** to provide the desired lubrication and cooling for the burnishing operation.

The proper pressure or compressive force to be applied to the surface **178** of the workpiece **144** during the burnishing operation is provided by carefully tightening or loosening the adjustment screw **162.** Because the burnishing ball **114** is coupled to the adjustment screw **162** through the spring means **166**, tightening or loosening the adjustment screw **162** will cause the spring means **166** to compress or expand axially and will correspond to a given force exerted on the surface **178** of the workpiece **144** by the burnishing ball **114**. Further, because the burnishing ball **114** is coupled through a spring means **166** having known spring characteristic, slight variations in the workpiece surface **178** will be absorbed by the spring means **166** without affecting the burnishing operation. Accordingly, the pressure or the compressive force exerted on the surface **178** of the workpiece **144** by the burnishing ball **114** can be precisely regulated. The burnishing operation is then controlled by a conventional electronic control unit, not shown, which controls the movement of the workpiece or the movement of the burnishing head.

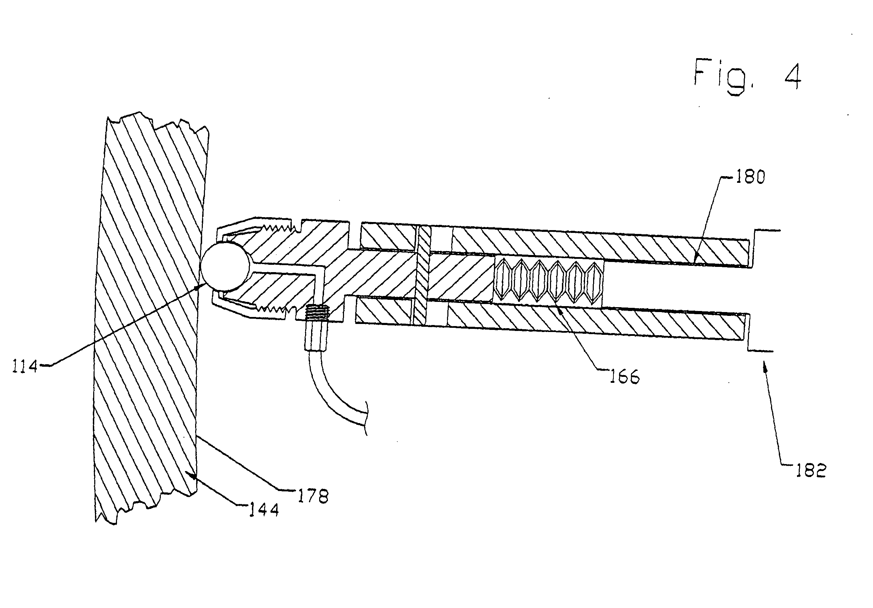

In an embodiment not falling within the scope of the invention as shown in **FIG. 4**, the adjustment screw is replaced by a follower rod **180** of a cylinder piston assembly **182**. By moving the follower rod **180** inwardly or outwardly, the spring tension is correspondingly increased or decreased and the pressure or compressive force applied by the burnishing ball **114** to the surface **178** of the workpiece **144** is correspondingly adjusted.

The apparatus utilizes the process of single-point burnishing, whereby the forward most tip of the burnishing ball is caused to pass over the surface of the workpiece in a rolling motion to provide deep compression with a minimal amount of cold working and surface hardening. It has been unexpectedly found that the single-point burnishing method applied in a single-pass or multiple passes of reduced compressive force is effective for producing compressive residual stresses following tensile deformation of the surface and to a certain depth to produce deep compression with minimal cold working. Further, allowing the burnishing ball to function as a freely rotating fluid bearing, complex curved surfaces can be easily burnished.

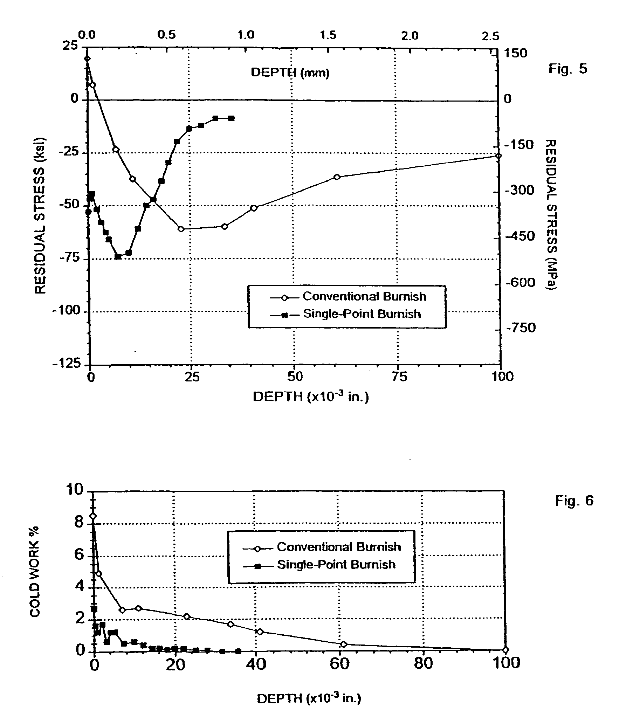

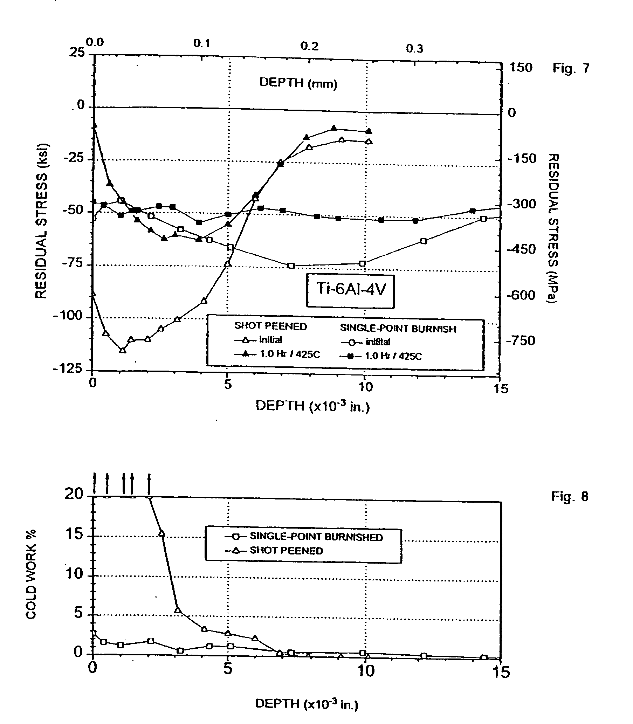

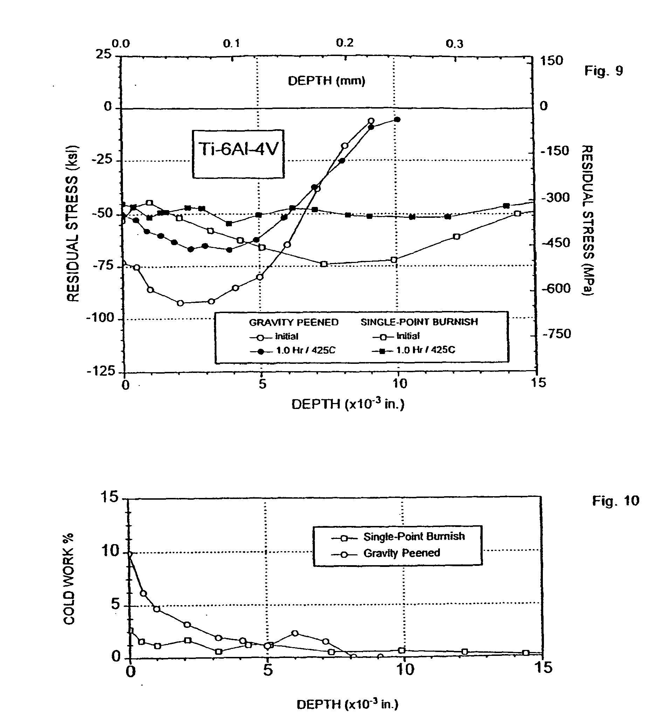

Referring to **FIGS. 5**, through **10**, the residual stress distribution (**FIG. 5**) and the associated percent of cold working (**FIG. 6**) is shown comparing conventional burnishing and the single point burnishing method. **FIGS. 7** and **9** show the amount of relaxation of compressive residual stress (after 1 hour at 425C) for the surface layer of a specimen and the percent of cold working associated therewith **(FIGS. 8** and **10**)for the single-point burnishing method and for conventional shot peening and gravity shot peening methods, respectively. The method for measuring subsurface residual stress and the percentage of cold working is known in the art and is described in Paul S. Prevey, "The Measurement of Subsurface Residual Stress and Cold Work Distributions in Nickel Base Alloys," Residual Stress in Design, Process and Materials Selection, ed. W.B. Young, Metals Park, Ohio: American Society for Metals, 1987, pp. 11 - 19. The single-point burnishing method produces cold work and surface work hardening far less than either conventional shot peening or gravity peening. Unexpectedly, it has been found that the increase in residual compressive stress with minimal cold work developed by the subject invention penetrates to a greater depth than most conventional methods, such as shot peening. Further, it has been unexpectedly found that by cold working the surface less than about 3.5%, and preferably less than about 2.0%, results in longer retention of compressive residual stress at elevated temperature, less rapid relaxation under cyclic loading, and minimizes the alteration of the residual stress field during tensile or compressive overload than conventional cold working and surface hardening processes. In addition, the burnishing method and the apparatus for implementing the method automatically provides lubrication and cooling at the point of contact of the workpiece and the contact portion of the burnishing head thereby minimizing the deformation of the surface of the workpiece and without preventing or hindering the burnishing operation.

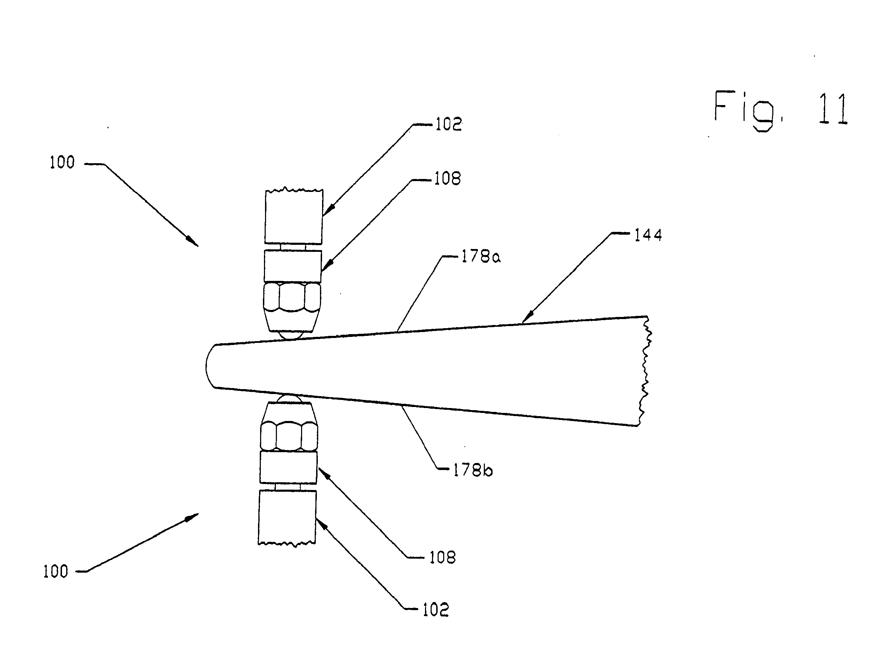

It will be apparent to one skilled in the art that the burnishing process and the apparatus for implementing the burnishing process can be utilized for a variety of workpiece configurations. For example, referring to **FIG. 11**, a workpiece **144** having more than one surface **178a** and **178b** is shown utilizing more than one burnishing apparatus **100** each having a socket **108** attached to a respective socket support **102**. As shown, the socket supports **102** may be positioned to permit both surfaces **178a** and **178b** of the workpiece **144** to be burnished simultaneously and to permit the burnishing forces to be directly opposing and balanced to allow the workpiece **144** to be supported between the sockets **108**.

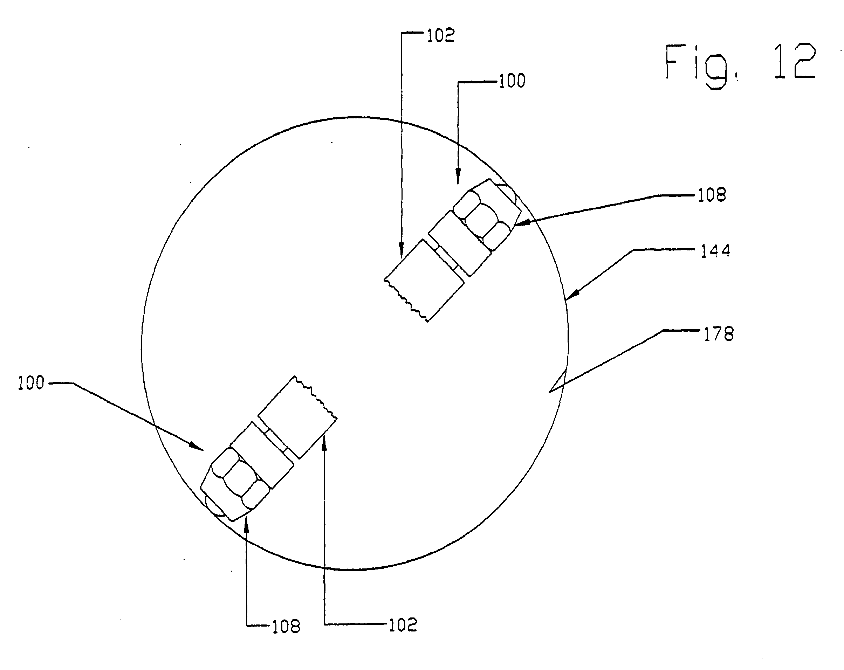

In another example of an apparatus for implementing the burnishing process, as illustrated in **FIG. 12,** a workpiece **144** having a generally cylindrical inner surface **178** is burnished utilizing a pair of axially opposed burnishing apparatus **100,** each having a socket **108** attached to a respective socket support **102**.

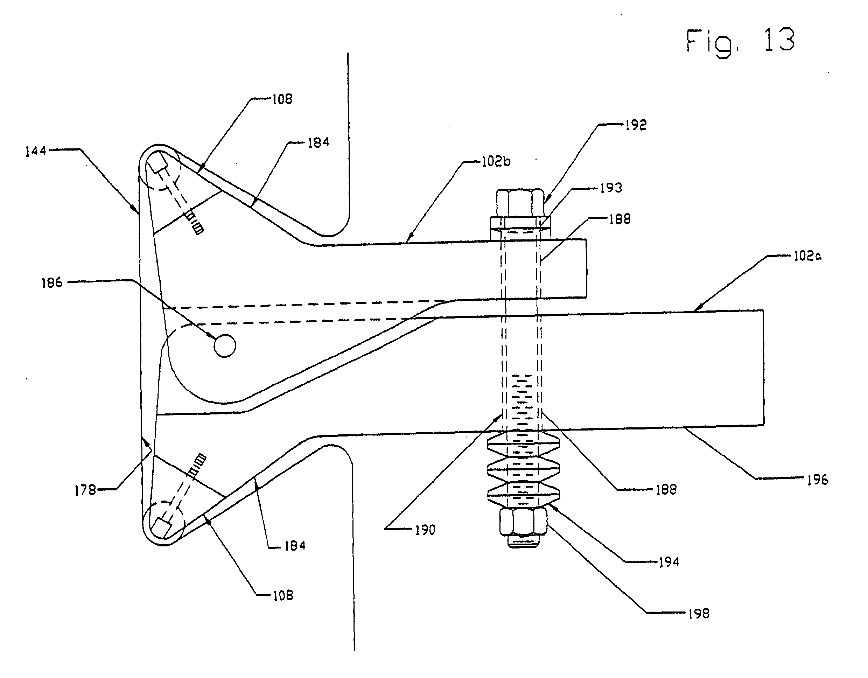

Referring to **FIG. 13,** another embodiment of the apparatus for implementing the burnishing process is shown, whereby complex work surfaces such as found in dovetail slots for turbine or compressor disks used in turbo machinery may be easily burnished. A pair of sockets **108**, which have been previously described and the detail of which has not been shown for clarity, are shown each mounted onto a lobe **184** of respective socket supports **102a** and **102b** in such a manner that the sockets **108** are directed outwardly at preselected angles. The socket supports **102a** and **102b** are rotatably pinned by a conventional pin **186** or other similar means to permit the socket **108** to be easily pivoted into position for engaging with the surface **178** of the workpiece **144**. The socket supports **102a** and **102b** each include a bore **188** for receiving a threaded shank **190** of a bolt **192** secured in place by a conventional threaded washer **193.** A spring means **194** is positioned about the shank **190** of the bolt **192** and is captured between the outer surface **196** of one socket support **102a** and a nut **198** threaded on the shank **190** and is of sufficient force to prevent the nut **198** from rotating while permitting slight pivoting of the socket supports **102a** and **102b** to respond and absorb slight variations in the workpiece surface.

Accordingly, the apparatus of the subject invention provides a relatively inexpensive and effective means of providing a compression force on a workpiece to induce compressive stress in a well defined localized area of a simple or complex workpiece surface configuration with a minimum of cold working and surface hardening. By minimizing the amount of cold working and surface hardening, it has been unexpectedly found that the method of the subject invention produces longer retention of compressive residual stress at elevated temperature, less relaxation under cyclic loading, and minimizes the alteration of the residual stress field during tensile or compressive overload. Accordingly, contrary to the practice and teaching of the burnishing industry, the method and the apparatus induces a compressive stress layer in the surface of a workpiece while deliberately minimizing the amount of cold working and surface hardening.

Although this invention has been shown and described with respect to detailed embodiments thereof, it will be understood by those skilled in the art that various changes may be made without departing from the scope of the invention as defined in the accompanying claim.

## Claims

1. An apparatus (100) for inducing a compressive stress on the surface of a workpiece, the apparatus (100) comprising:
a socket (108) having a generally cylindrical tip member (104) integrally formed with a generally cylindrical rod member (106), and a socket support (102) for supporting said socket on a conventional tool holder, wherein said tip member comprises a ball seat (110) having an essentially spherical shape adapted to the surface of a burnishing ball (114) disposed within said ball seat (110); and
means for directing lubrication fluid from a reservoir to said ball seat (110) to force said burnishing ball (114) outwardly toward the surface of the workpiece and for providing said lubricating fluid around the outer surface of said burnishing ball (114) to permit said burnishing ball to float continuously upon a thin film of said lubricating fluid,
wherein said socket support (102) comprises a slide (152) having a longitudinally extending bore (154) having a first end (156) for receiving said rod member (106) and wherein a mechanical spring means (166) forces the socket (108) toward the workpiece, **characterized in that** the bore (154) has a second, threaded end (158) having a threaded inner surface (160), wherein an adjustment screw (162) is received in said threaded inner surface (160) of said bore (154), and wherein said adjustment screw (162) includes an inner end (164) coupled to said rod member (106) through the mechanical spring means (166).

## Patentansprüche

1. , Vorrichtung (100) zum Induzieren einer Druckspannung bzw. -beanspruchung auf der Oberfläche eines Werkstücks, wobei die Vorrichtung (100) umfaßt:
eine Muffe bzw. Buchse (108), die ein allgemein zylindrisches Spitzenglied (104) aufweist, das einstückig bzw, integral mit einem allgemein zylindrischen Stangen- bzw. Stabglied (106) ausgebildet ist, und einen Muffen- bzw. Buchsensupport (102), um die Muffe bzw. Buchse auf einen konventionellen Werkzeughalter zu unterstützen, wobei das Spitzenglied einen Kugelsitz (110) umfaßt, der eine im wesentlichen kugelförmige Form aufweist, die an die Oberfläche einer Polier- bzw. Feinwalzkugel (114) adaptiert ist, welche in dem Kugelsitz (110) angeordnet ist; und
Mittel zum Richten eines Schmiermittelfluids von einem Reservoir zu dem Kugelsitz (110), um die Feinwalzkugel (114) nach außen zu der Oberfläche bzw. Fläche des Werkstücks zu zwingen bzw. zu beaufschlagen und um das Schmiermittelfluid um die Außenoberfläche der Feinvitalzkugef (114) zur Verfügung zu stellen, um der Feinwalzkugel zu ermögüchen, kontinuierlich auf einem dünnen Film des Schmiermittelfluids zu schwimmen,
wobei der Muffen- bzw. Buchsensupport (102) einen Schieber (152) umfaßt, der eine sich längs erstreckende Bohrung (154) aufweist, die ein erstes Ende (156) zum Aufnehmen des Stabglieds (106) aufweist, und wobei mechanische Federmittel (166) die Muffe bzw. Buchse (108) zu dem Werkstück beaufschlagen;
**dadurch gekennzeichnet, daß** die Bohrung (154) ein zweites Gewindeende (158) aufweist, das eine Gewindeinnenoberfläche (160) aufweist, wobei eine Einstellschraube (162) in der mit einem Gewinde versehenen Oberfläche (160) bzw. Gewindeinnenoberfläche (160) der Bohrung (154) aufgenommen ist, und wobei die Einstellschraube (162) ein inneres bzw. Innenende (164) beinhaltet, das mit dem Stabglied (106) durch die mechanischen Federmittel (166) gekoppelt ist.

## Revendications

1. Dispositif (100) pour produire une contrainte de compression sur la surface d'une pièce usinée, le dispositif (100) comprenant :
une douille (108) ayant un élément d'extrémité généralement cylindrique (104) formé de façon solidaire avec un élément de tige généralement cylindrique (106) et un support de douille (102) pour supporter ladite douille sur un support d'outil classique, dans lequel ledit élément d'extrémité comprend un siège à bille (110) ayant une forme essentiellement sphérique agencé sur la surface d'une bille de polissage (114) disposée dans ledit siège à bille (110) ; et
un moyen pour diriger du fluide de lubrification à partir d'un réservoir audit siège à bille (110) pour pousser ladite bille de polissage (114) vers l'extérieur vers la surface de la pièce usinée et pour fournir ledit fluide de lubrification autour de la surface extérieure de ladite bille de polissage (114) pour permettre à ladite bille de polissage de flotter en continu sur un mince film dudit fluide de lubrification,
dans lequel ledit support de douille (102) comprend un coulisseau (152) ayant un alésage s'étendant longitudinalement (154) ayant une première extrémité (156) pour recevoir ledit élément de tige (106) et dans lequel un moyen élastique mécanique (166) pousse la douille (108) vers la pièce usinée, **caractérisé en ce que** l'alésage (154) a une deuxième extrémité filetée (158) ayant une surface intérieure filetée (160), dans lequel une vis d'ajustement (162) est reçue dans ladite surface intérieure filetée (160) dudit alésage (154) et dans lequel ladite vis d'ajustement (162) comprend une extrémité intérieure (164) couplée audit élément de tige (106) au travers du moyen élastique mécanique (166).
